# EUROPÄISCHE PATENTSCHRIFT

(11) **EP 0 976 624 B1**
(45) Veröffentlichungstag und Bekanntmachung des Hinweises auf die Patenterteilung: **29.03.2006**
(21) Anmeldenummer: 99111355.6
(22) Anmeldetag: 10.06.1999
(51) Int. Cl.: B60R 21/26

(54) **Airbag-Vorrichtung mit Gasgenerator**
Airbag device with gas generator
Dispositif à coussin gonflable comportant un générateur de gaz

(30) Priorität: 31.07.1998 DE 19834690
(43) Veröffentlichungstag der Anmeldung: 02.02.2000
(73) Patentinhaber: TAKATA-PETRI (Ulm) GmbH, 89081 Ulm (DE)
(72) Erfinder: Einsiedel, Heinrich, 89073 Ulm (DE); Glöckler, Oliver, 89278 Nersingen (DE)
(74) Vertreter: Müller, Wolfram Hubertus

(56) Entgegenhaltungen:
- DE-C- 19 626 761
- DE-U- 29 702 011
- DE-U- 29 801 104
- GB-A- 1 324 401
- US-A- 3 747 952

## Beschreibung

Die Erfindung betrifft eine Airbag-Vorrichtung nach dem Oberbegriff des Patentanspruches 1.

Die Gasgeneratorgehäuse bekannter Airbag-Vorrichtungen bestehen entweder aus zwei Halbschalen, die den Gasgenerator auf eine bestimmte Länge umschließen, wobei eine Radial- und Flächendeckung nötig ist, oder es ist ein einteiliges Gehäuse mit zwei Radialdichtungen am Umfang des Gasgenerators oder mit einer Radialdichtung und einer verschlossenen Seite vorgesehen.

Derartige Gehäuse sind sehr voluminös und schwer, so daß sie insbesondere zum Einbau bei Kopfairbag-Vorrichtungen nur schwer zu handhaben und unterzubringen sind.

So beschreibt die DE 298 01 104 U1 einen Gasgenerator, der von einem zweiteiligen Kupplungsstück in einem Abschnitt umschlossen ist. Das Kupplungsstück besteht aus zwei Schalen, die mittels Schrauben zusammengepresst werden.

Aus der gattungsbildenden DE297 02 011 U1 ist eine Airbagvorrichtung bekannt, bei der ein rohrförmiger Stutzen am Gasgenerator mittels einer Schelle befestigt ist. Hierfür ist der Stutzen in einer Öffnung der Schelle gelagert.

Das Ziel der Erfindung besteht darin, eine Airbag-Vorrichtung, der eingangs genannten Art zu schaffen, die einen sehr geringen Platzbedarf hat, kein großes Gewicht aufweist und leicht montierbar ist, ohne daß Dichtigkeits-, Montage- oder Sicherheitsprobleme entstehen.

Zur Lösung dieser Aufgabe sind bei einer eingangs genannten Airbag-Vorrichtung die Merkmale des kennzeichnenden Teils von Anspruch 1 vorgesehen.

Erindungsgemäß zeichnet sich also das mit dem Gasgenerator verbundene Gehäuse dadurch aus, dass von den im allgemeinen zwei vorhandenen Öffnungen bzw. Gruppen von Öffnungen jeweils nur eine einem einseitig angesetzten Gehäuse zugeordnet ist. Die Dichtfläche ist sehr eng an die zugeordnete Gasaustrittsöffnung verlegt. Hierdurch sind die auf die Dichtung wirkenden Kräfte minimiert. Die andere Gasaustrittsöffnung wird bei der Montage vorzugsweise verschlossen.

Dadurch entfällt ein aufwendiges Gehäuse, welches das Gas aller Öffnungen sammelt und dann in die vorzugsweise als Hohlrohr ausgebildete Gasführungsleitung leitet. Es ist aber auch denkbar, dass zur Parallel-Speisung von zwei Gassäcken von entgegengesetzten Seiten zwei erfindungsgemäße Gehäuse an die beiden diametral gegenüberliegenden Öffnungen angesetzt sind.

Eine sattelförmige Auflagefläche, in die ein Spannband eingelegt werden kann, befindet sich radial außerhalb einer Ausnehmung eines Befestigungsgehäuseteils und erstreckt sich bis zu zwei seitlichen Einsenkungen am radial inneren Rand des Befestigungsgehäuseteils.

Nachdem erfindungsgemäß für das Gasausströmen in einem Gehäuse statt zwei Öffnungen nur eine Öffnung zur Verfügung steht, müssen die Bohrungen so groß sein, dass die verbleibende(n) Bohrung(en) die für die Funktion benötigte Größe haben. Die Größe der Bohrungen muss bei der Herstellung des Gasgenerators vorgesehen werden.

Die durch ein Verschlussmittel oder ein weiteres, einseitiges Gehäuse abzudeckende Gasaustrittsöffnung des Gasgenerators wird für Zwecke des Transports beibehalten, weil die Gasgeneratoren bis zur Montage, d.h. während des gesamten Transports, dadurch schubneutral sind. Aus diesem Grunde wird die gegebenenfalls beim späteren Betrieb nicht genutzte Gasaustrittsöffnung erst nach dem Transport beim Einbau oder kurz vor dem Einbau in das Fahrzeug verschlossen.

Vorteilhafte Weiterbildungen der Erfindung sind durch die Unteransprüche gekennzeichnet.

Die Erfindung wird im folgenden beispielsweise anhand der Zeichnungen beschrieben. In diesen zeigt.
- Fig. 1: eine perspektivische Ansicht des mit einem Gasabführungsgehäuse verbundenen Gasgenerators einer erfindungsgemäßen Airbag-Vorrichtung,
- Fig. 2: einen Vertikal-Längsschnitt durch den Gegenstand der Fig. 1, und zwar von der entgegengesetzten Seite wie in Fig. 1 gesehen,
- Fig. 3: eine perspektivische Ansicht nur des Gasabführungsgehäuses einer erfindungsgemäßen Airbag-Vorrichtung und
- Fig. 4: eine Draufsicht des Gegenstandes der Fig. 3.

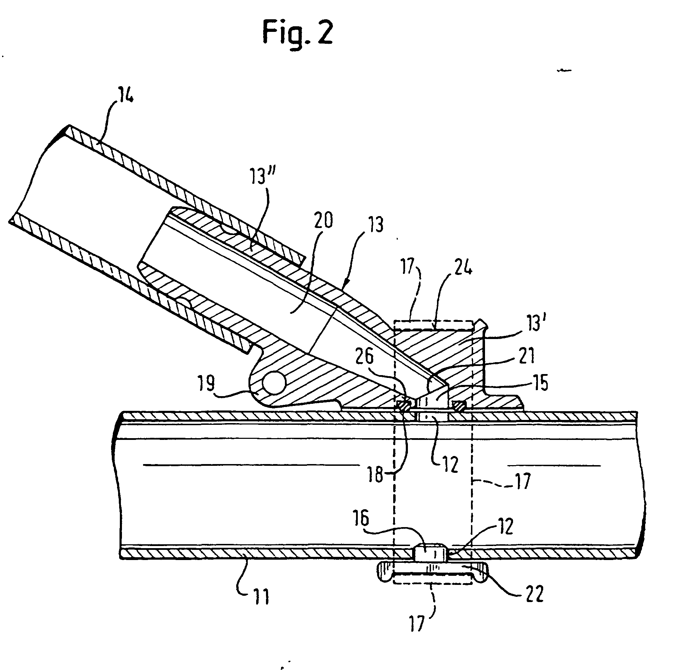

Nach Fig. 2 weist ein üblicher, rohrartiger Gasgenerator 11 an seinem einen Endbereich zwei diametral gegenüberliegende Gasaustrittsöffnungen 12 auf. Die in Fig. 2 untere Gasaustrittsöffnung 11 ist durch einen radial von außen eingesetzten Stopfen 16 gas- und druckdicht verschlossen. Der Stopfen ist an einer Halteschelle 22 befestigt, die zusammen mit dem Stopfen 16 von außen auf den Gasgenerator 11 aufgesetzt ist.

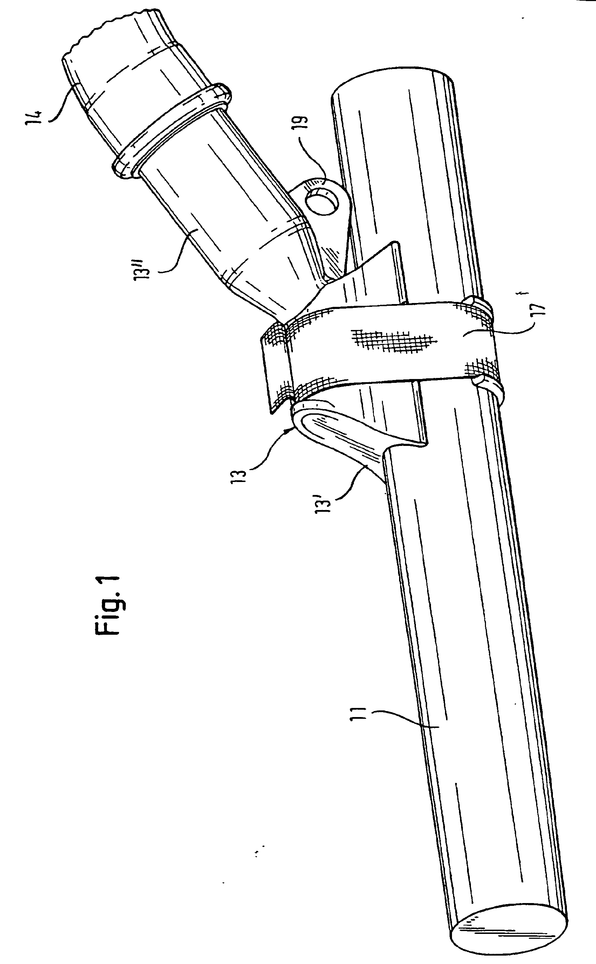

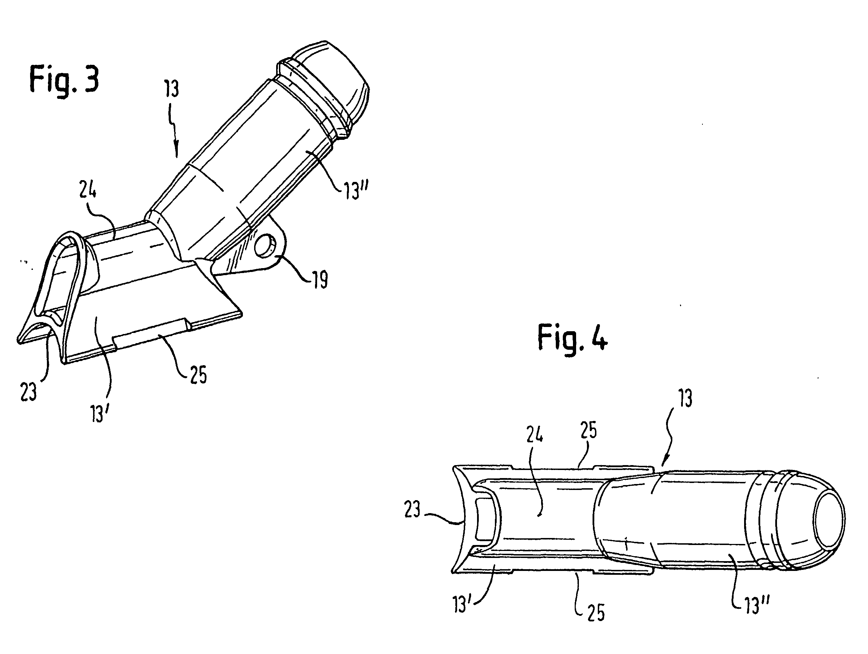

Diametral gegenüberliegend zur Halteschelle 22 befindet sich ein erfindungsgemäß ausgebildetes, einseitiges Gehäuse 13, welches nach den Fig. 1 bis 4 aus einem an den Gasgenerator 11 anzulegenden bzw. angelegten Befestigungsgehäuseteil 13' und einem davon schräg nach außen abzweigenden Leitungsanschlußteil 13" besteht. Das Befestigungsgehäuseteil 13' ist auf der der Außenwand des Gasgenerators 11 zugewandten Seite rinnenartig ausgebildet, und zwar derart, daß die rinnenförmige Ausnehmung komplementär zum Außenumfang des Gasgenerators 11 ausgebildet ist. Das Befestigungsgehäuseteil 13' sitzt somit rittlings auf dem Gasgenerator 11 auf, wobei der von der rinnenförmigen Ausnehmung 23 eingenommene Bereich sich in Umfangsrichtung über einen Winkel von weniger als 180° und vorzugsweise ca. 90 bis 160° erstreckt.

Radial außerhalb der Ausnehmung 23 befindet sich eine sattelförmige Auflagefläche 24, die sich bis zu zwei seitlichen Einsenkungen 25 am radial inneren Rand des Befestigungsgehäuseteils 13' erstreckt. Die Auflagefläche 24 und die Ausnehmungen 25 haben eine solche Breite, daß darin ein Spannband 17 eingelegt werden kann, welches um den Gasgenerator 11 und die Halteschelle 22 an der diametral gegenüberliegenden Seite herumgelegt ist. Durch Spannen des Spannbandes 17 wird das Gehäuse 13 ebenso wie die Halteschelle 22 mit dem Stopfen 16 fest gegen die Au-ßenwand des Gasgenerators 11 gespannt.

Um das Gehäuse 13 gegen den Gasgenerator 11 sicher gas- und druckdicht abzudichten, ist rundum eine der oberen Gasaustrittsöffnung 12 des Gasgenerators 11 unmittelbar gegenüberliegende Gaseintrittsöffnung 15 des Befestigungsgehäuseteils 13' eine Ringnut 26 vorgesehen, in die eine Ringdichtung 18 in Form eines O-Ringes eingelegt ist. Die Ringnut 26 und der O-Ring 18 folgen dabei der Krümmung des Gasgenerators 11, so daß beim Auflegen des Gehäuses 13 auf den Gasgenerator 11 gemäß den Fig. 1 und 2 eine vollständige Abdichtung zwischen diesen beiden Bauelementen gewährleistet ist. Dadurch, daß die Ringdichtung 18 unmittelbar und eng um die Gaseintrittsöffnung 15 herumgelegt ist, sind die auf die Dichtung wirkenden Kräfte vergleichsweise gering.

Von der Gaseintrittsöffnung 15 zweigt an einer Abwinklung 21 ein Gasführungskanal 20 ab, der sich axial durch das Leitungsanschlußteil 13" erstreckt. Das Leitungsanschlußteil 13" dient dazu, eine Gasführungsleitung 14 gas- und druckdicht zu halten, die auf das Leitungsanschlußteil 13" gemäß Fig. 2 axial dicht aufgeschoben ist. Die zum Beispiel als Rohr oder Schlauch ausgeführte Gasführungsleitung 14 führt zu einem in der Zeichnung nicht dargestellten Gassack, der bei Zündung des Gasgenerators 11 aufgeblasen werden soll.

In dem Winkelzwickel zwischen dem Gasgenerator 11 und dem Leitungsanschlußteil 13" des Gehäuses 13 ist am Leitungsanschlußteil 13" eine Anschlußöse 19 angeformt, die zur Befestigung der aus Gasgenerator 11 und Gehäuse 13 bestehenden Baueinheit an einer geeigneten Stelle des Fahrzeugchassis dient.

### Die Montage des erfindungsgemäßen Gehäuses geht wie folgt vor sich:

Zunächst werden das erfindungsgemäße Gehäuse 13 und die Halteschelle 22 mit dem Stopfen 16 in die aus Fig. 2 ersichtliche Position gebracht. Anschließend wird dann das Spannband 17 beispielsweise mittels einer geeigneten Spannvorrichtung um den Gasgenerator, das Gehäuse 13 und die Halteschelle 22 herumgelegt und festgespannt, wodurch einerseits das Gehäuse 13 und andererseits die Halteschelle 22 mit dem Stopfen 16 so fest radial nach innen gegen den Gasgenerator 11 gedrückt werden, daß zwischen diesen Bauteilen praktisch eine Baueinheit gebildet wird und eine absolut gasdichte Strömungsverbindung zwischen Gasgenerator 11 und Gasführungsleitung 14 erzielt wird.

Statt des Stopfens 16 könnte auch ein zweites, einseitiges, gleichartiges Gehäuse 13 diametral gegenüberliegend dem dargestellten Gehäuse 13 dicht angeordnet und mittels des gleichen Spannbandes 17 festgespannt sein, falls ein zweiter Gassack vom gleichen Gasgenerator 11 aufgeblasen werden soll.

### Bezugszeichenliste

- 11: Gasgenerator
- 12: Gasaustrittsöffnung
- 13: Gehäuse
- 13': Befestigungsgehäuseteil
- 13": Leitungsanschlußteil
- 14: Gasführungsleitung
- 15: Gaseintrittsöffnung
- 16: Stopfen
- 17: Spannband
- 18: Ringdichtung
- 19: Anschlußöse
- 20: Gasführungskanal
- 21: Abwinklung
- 22: Halteschelle
- 23: Ausnehmung
- 24: Auflagefläche
- 25: Einsenkung
- 26: Ringnut

## Patentansprüche

1. Airbag-Vorrichtung mit einem Gasgenerator (11), der an einem Umfang mehrere, vorzugsweise zwei diametral gegenüberliegende Gasaustrittsöffnungen (12) aufweist, einem das aus dem Gasgenerator (11) ausströmende Gas aufnehmenden, am Gasgenerator gas- und druckdicht befestigten Gehäuse (13) und einer zu einem aufblasbaren Gassack führenden Gasführungsleitung (14),
**dadurch gekennzeichnet,**
**dass** das Gehäuse (13) nur einseitig am Außenumfang des Gasgenerators (11) anliegt und wenigstens eine einer Gasaustrittsöffnung gegenüberliegende Gaseintrittsöffnung (15) aufweist und eine sattelförmige Auflagefläche (24) aufweist, die sich radial außerhalb der am Außenumfang des Gasgenerators (11) anliegenden Seite des Gehäuses (13) befindet und bis zu zwei seitlichen Einsenkungen (25) am radial inneren Rand des Gehäuses (13) erstreckt und in die ein Spannmittel, insbesondere ein Spannband (17) eingelegt ist, wobei das Spannmittel um das Gehäuse (13) herumgelegt und festgespannt ist,
und **dass** wenigstens eine weitere Gasaustrittsöffnung (12), die der vorerwähnten vorzugsweise diametral gegenüberliegt, durch ein Verschlussmittel (16), insbesondere einen Stopfen, gas- und druckdicht verschlossen oder durch ein gleichartiges Gehäuse (13) abgedeckt ist.

2. Vorrichtung nach Anspruch 1, **dadurch gekennzeichnet, daß** das Gehäuse (13) durch das um den Gasgenerator (11) herumgelegtes Spannmittel (17), insbesondere ein Spannband oder eine Spannschelle, gegen die Außenwand des Gasgenerators (11) gepresst ist.

3. Vorrichtung nach Anspruch 2, **dadurch gekennzeichnet, daß** das Spannmittel (17) auch das Verschlussmittel (16) oder das weitere, gleichartige Gehäuse (13) umspannt und dicht in bzw. gegen die zugeordnete Gasaustrittsöffnung (12) drückt.

4. Vorrichtung nach einem der vorhergehenden Ansprüche, **dadurch gekennzeichnet, dass** rund um die Gaseintrittsöffnung (15) des Gehäuses (13) bzw. der Gehäuse (13) eine vorzugsweise als O-Ring ausgebildete Ringdichtung (18) am Gehäuse vorgesehen ist, die rund um die zugeordnete Gasaustrittsöffnung (12) gas- und druckdicht gegen die Außenwand des Gasgenerators (11) gedrückt ist.

5. Vorrichtung nach einem der vorhergehenden Ansprüche, **dadurch gekennzeichnet, dass** das Gehäuse (13) im Bereich des Kontaktes mit dem Gasgenerator (11) eine zu dessen Außenform komplementäre Innen-Formgebung hat.

6. Vorrichtung nach einem der vorhergehenden Ansprüche, **dadurch gekennzeichnet, dass** das Gehäuse (13) aus einem im Wesentlichen parallel zum Gasgenerator (11) verlaufenden und an ihm anliegenden Befestigungs-Gehäuseteil (13') und einem nach außen abgewinkelten Leitungsanschlussteil (13") besteht.

7. Vorrichtung nach einem der vorhergehenden Ansprüche, **dadurch gekennzeichnet, dass** das Gehäuse (13) insbesondere am Leitungsanschlussteil (13") eine zum Befestigen am Fahrzeugchassis bestimmte Anschlußöse (19) aufweist.

8. Vorrichtung nach einem der Ansprüche 6 oder 7, **dadurch gekennzeichnet, dass** im Gehäuse (13) ein Gasführungskanal (20) vorgesehen ist, der nahe der Gasaustrittsöffnung eine Abwinklung zur Gasaustrittsöffnung hin aufweist.

## Claims

1. Airbag device with a gas generator (11), which has more than one, preferably two diametrically opposite gas outlet openings (12) on a circumference, a housing (13) which receives the gas flowing out of the gas generator (11) and is fastened to the gas generator in a gastight and pressure tight manner, and a gas-conducting line (14) leading to an inflatable airbag, **characterized in that** the housing (13) bears against the outer circumference of the gas generator (11) only on one side and has at least one gas inlet opening (15) lying opposite a gas outlet opening and a saddle-shaped supporting surface (24) which is situated radially outside that side of the housing (13) which bears against the outer circumference of the gas generator (11), and extends as far as two lateral hollows (25) on the radially inner edge of the housing (13) and into which a clamping means, in particular a clamping strap (17) is inserted, the clamping means being placed around the housing (13) and being securely clamped in place,
and **in that** at least one further gas outlet opening (12), which preferably lies diametrically opposite the abovementioned gas outlet opening, is closed by a closure means (16), in particular a stopper, in a gastight and pressure tight manner or is covered by a similar housing (13).

2. Device according to Claim 1, **characterized in that** the housing (13) is pressed against the outer wall of the gas generator (11) by the clamping means (17), in particular a clamping strap or a clamping clip, placed around the gas generator (11).

3. Device according to Claim 2, **characterized in that** the clamping means (17) also surrounds the closure means (16) or the further, similar housing (13) and presses it tightly into or against the associated gas outlet opening (12).

4. Device according to one of the preceding claims, **characterized in that** a ring seal (18) preferably designed as an O-ring is provided on the housing around the gas inlet opening (15) of the housing (13) or of the housings (13) and is pressed against the outer wall of the gas generator (11) around the associated gas outlet opening (12) in a gastight and pressure tight manner.

5. Device according to one of the preceding claims, **characterized in that** the housing (13) has an inner shaping complimentary to the outer shape of the gas generator (11) in the region of contact therewith.

6. Device according to one of the preceding claims, **characterized in that** the housing (13) comprises a fastening housing part (13') which runs essentially parallel to the gas generator (11) and bears against it, and a line connecting part (13") which is angled outwards.

7. Device according to one of the preceding claims, **characterized in that** the housing (13), in particular on the line connecting part (13''), has a connecting eyelet (19) intended for fastening it to the vehicle chassis.

8. Device according to either of Claims 6 and 7, **characterized in that** a gas-conducting duct (20) is provided in the housing (13) and, in the vicinity of the gas outlet opening, is angled towards the gas outlet opening.

## Revendications

1. Dispositif à coussin gonflable comportant un générateur de gaz (11) qui, sur une périphérie, présente plusieurs ouvertures de sortie de gaz (12), de préférence deux sorties diamétralement opposées entre elles, un logement (13) fixé de façon étanche au gaz et à la pression sur le générateur de gaz recevant le gaz s'écoulant du générateur de gaz (11) et une conduite de gaz (14) conduisant vers un sac gonflable,
**caractérisé en ce que**,
le logement (13) ne repose que sur un seul côté sur la périphérie extérieure du générateur de gaz (11) et présente au moins une ouverture d'entrée de gaz (15) en opposition à une ouverture de sortie de gaz et une surface d'appui en forme de selle (24) qui se situe radialement à l'extérieur du côté du logement (13) adjacent à la périphérie extérieure du générateur de gaz (11) et s'étend jusqu'à deux dépressions latérales (25) sur le bord interne radial du logement (13) et dans lesquelles est inséré un élément de serrage, en particulier une bande de serrage (17), de sorte que l'élément de serrage entoure le logement (13) et serre celui-ci solidement,
et **en ce qu'**au moins une autre ouverture de sortie de gaz (12), qui est située de préférence de façon diamétralement opposée à l'ouverture précitée, est obturée par un élément d'obturation (16), en particulier un bouchon étanche au gaz et à la pression, ou est recouverte par un logement identique (13).

2. Dispositif selon la revendication 1, **caractérisé en ce que** le logement (13) est pressé par l'élément de serrage (17) entourant le générateur de gaz (11), en particulier une bande de serrage ou un collier de serrage, contre la paroi extérieure du générateur de gaz (11).

3. Dispositif selon la revendication 2, **caractérisé en ce que** l'élément de serrage (17) entoure également l'élément d'obturation (16) ou l'autre logement identique (13) et appuie de façon étanche dans ou contre l'orifice de sortie de gaz correspondante (12).

4. Dispositif selon l'une des revendications précédentes, **caractérisé en ce que**, autour de l'ouverture d'entrée de gaz (15) du ou des logements (13), est prévu un élément d'étanchéité annulaire (18) formé de préférence sous la forme d'un joint torique sur le logement et qui vient en compression autour de l'orifice de sortie de gaz correspondante (12) de façon étanche au gaz et à la pression contre la paroi extérieure du générateur de gaz (11).

5. Dispositif selon l'une des revendications précédentes, **caractérisé en ce que** le logement (13) présente, au niveau du contact avec le générateur de gaz (11) une configuration interne complémentaire à la forme externe du générateur de gaz.

6. Dispositif selon l'une des revendications précédentes, **caractérisé en ce que** le logement (13) consiste en un élément de logement de fixation (13') s'étendant de façon sensiblement parallèle au générateur de gaz (11) et venant en appui contre celui-ci et un élément de raccordement de conduite (13") coudé vers l'extérieur.

7. Dispositif selon l'une des revendications précédentes, **caractérisé en ce que** le logement (13) présente, en particulier sur l'élément de raccordement de conduite (13"), un oeillet de rattachement (19) destiné à la fixation sur le châssis du véhicule.

8. Dispositif selon l'une des revendications 6 ou 7, **caractérisé en ce que** dans le logement (13) est prévu un canal de conduite de gaz (20) qui présente, à proximité de l'ouverture de sortie de gaz, un coude par rapport à l'ouverture de sortie de gaz.
